# EUROPÄISCHE PATENTSCHRIFT

(11) **EP 1 300 618 B1**
(45) Veröffentlichungstag und Bekanntmachung des Hinweises auf die Patenterteilung: **16.03.2005**
(21) Anmeldenummer: 02020737.9
(22) Anmeldetag: 16.09.2002
(51) Int. Cl.: F16K 11/078, F16K 31/62, F16K 1/12, E03C 1/04, E03C 1/22

(54) **Sanitäreinrichtung**
Sanitary device
Dispositif sanitaire

(30) Priorität: 08.10.2001 DE 10149516
(43) Veröffentlichungstag der Anmeldung: 09.04.2003
(73) Patentinhaber: HANSA METALLWERKE AG, 70567 Stuttgart (DE)
(72) Erfinder: Schmid, Lars, 72622 Nürtingen (DE)
(74) Vertreter: Ostertag, Ulrich, Dr.

(56) Entgegenhaltungen:
- EP-A- 0 864 790
- DE-A- 2 526 949
- DE-A- 19 523 884
- DE-B- 1 156 713
- GB-A- 1 430 234
- US-A- 5 960 828
- US-B1- 6 199 586

## Beschreibung

Die Erfindung betrifft eine Sanitäreinrichtung mit
a) einer Mischarmatur, die ihrerseits aufweist:
   aa) ein Gehäuse, das einen Zulauf für kaltes Wasser, einen Zulauf für warmes Wasser und einen Auslauf für Mischwasser umfaßt;
   ab) ein in dem Gehäuse angeordnetes, von Hand betätigbares Ventilelement, welches durch Bewegung in unterschiedlichen Richtungen den Fluß von Kalt- und/oder Warmwasser in einstellbarer Weise freigibt;
b) einer Peripherieeinrichtung, welche über eine wasserführende Hydraulikleitung mit der Mischarmatur verbunden und von dieser aus betätigbar ist;
c) einem in dem Gehäuse der Mischarmatur angeordneten Umstellelement, welches in einer ersten Stellung eine Verbindung zwischen einem Wasserzulauf und der Hydraulikleitung und in einer zweiten Stellung eine Verbindung zwischen dem Auslauf und der Hydraulikleitung herstellt.

In der Nähe von sanitären Mischarmaturen finden sich im Badezimmer häufig sog. "Peripherieeinrichtungen", die zwischen zwei Stellungen hin- und herbewegt werden müssen. Ein prominentes Beispiel einer derartigen Peripherieeinrichtung ist das Auslaufventil, welches sich am Boden des Waschtischs befindet, an dem die Mischarmatur montiert ist. Andere Beispiele für Peripherieeinrichtungen sind Geräteabsperrventile, welche den Wässerfluß zu einer Spül- oder Waschmaschine freigeben, die Umstellvorrichtung, welche den Wasserfluß wahlweise zu einer Brause oder in eine Badewanne freigibt, und ähnliches mehr. Normalerweise werden diese Peripherieeinrichtungen unabhängig von der Mischarmatur von Hand betätigt. Zunehmend wird jedoch der Wunsch laut, die Peripherieeinrichtungen von der Mischarmatur aus bedienen zu können, wozu letztere mit der Peripherieeinrichtung über eine Hydraulikleitung verbunden ist.

Eine Sanitäreinrichtung der eingangs genannten Art ist in der DE-AS 11 56 713 beschrieben. Die hydraulisch betätigte Peripherieeinrichtung ist hier ein Ablaufventil. Als Umstellelement der Mischarmatur dient ein als Hohlzylinder oder Hohlkugel ausgebildetes Ventilküken, das um eine horizontale Achse verschwenkbar ist. Durch eine Nut in der Mantelfläche stellt dieses Ventilküken stets entweder eine Verbindung zwischen dem Kaltwasserzulauf der Mischarmatur und der Hydraulikleitung oder dem Auslauf der Mischarmatur und der Hydraulikleitung her. Das Ablaufventil ist nur so lange geöffnet, wie in der Hydraulikleitung Wasserdruck ansteht, und schließt automatisch, wenn der Wasserdruck entfällt, beispielsweise durch entsprechendes Verschwenken des Ventilkükens. Die Ventilelemente, welche der Einstellung des auslaufenden Mischwassers dienen, befinden sich offensichtlich im Inneren des verschwenkbaren Ventilkükens und sind von diesem unabhängig.

Diese bekannte Sanitäreinrichtung weist mehrere Nachteile auf: Zum einen ist der Aufbau der Mischarmatur verhältnismäßig kompliziert; es handelt sich um eine völlig selbständige Konstruktion, da das verschwenkbare Küken sich in dieser Weise in keiner anderen Mischarmatur findet. Durch das Nebeneinander von Umstellelement und den Wasserfluß bestimmendem Ventilelement wird eine große Vielzahl von Teilen benötigt. Außerdem ist es nicht möglich, ohne anstehenden Wasserdruck das Ablaufventil in der geöffneten Stellung zu halten.

Aufgabe der vorliegenden Erfindung ist es, eine Sanitäreinrichtung der eingangs genannten Art so auszugestalten, daß sie insgesamt preiswerter und besser mit bereits vorhandenen Konstruktionen von Mischarmaturen kompatibel ist, so daß an vorhandenen Konstruktionen nur geringfügige Änderungen durchgeführt werden müssen.

Diese Aufgabe wird erfindungsgemäß dadurch gelöst, daß
d) das Ventilelement derart ausgestaltet ist, daß es gleichzeitig als Umstellelement dient und in denjenigen Bereichen seiner möglichen Positionen, in denen es die normale Funktion einer Mischarmatur erfüllt, eine Kommunikation der Hydraulikleitung sowohl mit dem Zulauf als auch mit dem Auslauf unterbindet.

Erfindungsgemäß werden also die Funktionen des Umstellelements und des Ventilelements, die bei der eingangs genannten DE-AS 11 56 713 noch getrennt waren, zusammengelegt. Das Ventilelement dient als Umstellelement in solchen Positionen, die normalerweise für seine Funktion als die Wasserströme bestimmendes Element nicht benötigt werden. Das Ventilelement wird über seinen normalen Stellbereich hinausbewegt, wenn es seine Funktion als Umstellelement erfüllen soll.

Dadurch, daß das Ventilelement in demjenigen Bereich seiner Positionen, in dem es seine "normale" Funktion ausübt, eine Kommunikation der Hydraulikleitung weder mit dem Wasserzulauf noch mit dem Auslauf zuläßt, verändert sich die Position des beweglichen Teils der Peripherieeinrichtung während des "normalen" Betriebs der Sanitärarmatur nicht: Ist die Peripherieeinrichtung nicht unter Druck, so verbleibt ihr bewegliches Teil selbstverständlich in dieser Position. Steht die Peripherieeinrichtung dagegen unter Druck, kann dieser Druck nicht abgebaut werden, so daß das bewegliche Teil der Peripherieeinrichtung ebenfalls in der entsprechenden Position verbleibt.

Zweckmäßig ist, wenn die beiden Stellungen des Ventilelements, in denen dieses eine Verbindung zu der Hydraulikleitung herstellt, durch Bewegung des Ventilelements in einer Richtung, die einer Veränderung der Temperatur des auslaufenden Mischwassers entspricht, erreichbar sind. Konventioneller Weise wird das Handbetätigungsorgan der Mischarmatur, also der Bediengriff, zur Veränderung der Temperatur um eine in etwa vertikale Achse verdreht. Hier ist es besonders einfach, außerhalb des normalen Bewegungsbereichs liegende Positionen des Ventilelements zu finden, die sich zur Steuerung der Peripherieeinrichtung eignen.

Bevorzugt ist dabei, wenn die beiden Stellungen des Ventilelements durch eine Bewegung des Ventilelements erreichbar sind, die eine Bewegung in Schließrichtung beinhaltet. Das Auffinden der Stellungen des Ventilelements, an welchen die Peripherieeinrichtung betätigt wird, gelingt dann besonders einfach. So kann beispielsweise die Mischarmatur zunächst geschlossen und dann eine Verschwenkung des Ventilelements in Richtung einer Temperaturveränderung bewirkt werden, die über den normalen Bewegungsweg des Ventilelements hinausgeht. Alternativ kann das Ventilelement auch in Schließrichtung über die Schließstellung hinaus bewegt werden, worauf sich wieder eine Schwenkbewegung in einer Richtung anschließt, die einer Temperaturveränderung entspricht. Der Schwenkwinkel kann in diesem Falle auch verhältnismäßig klein sein.

Dabei wird wiederum bevorzugt, daß eine Einrichtung vorgesehen ist, welche an der Grenze des normalen Bewegungsbereichs des Ventilelements einen überwindbaren Widerstand erzeugt. Der Benutzer kann also an dem spürbaren Widerstand erkennen, wenn er bei der Verstellung des Ventilelements den "normalen" Funktionsbereich verläßt, so daß er nicht versehentlich in Positionen des Ventilelements gelangt, in denen dieses die Peripherieeinrichtung betätigt.

Besonders vorteilhaft ist diejenige Ausgestaltung der erfindungsgemäßen Sanitäreinrichtung, bei welcher
a) das bewegliche Ventilelement eine ebene Steuerscheibe ist, die eine Ausnehmung aufweist, welche zumindest teilweise einen Wasserumlenkkanal bildet;
b) eine mit der Steuerscheibe zusammenwirkende, feststehende ebene Grundscheibe vorgesehen ist, welche eine Durchtrittsöffnung für Kaltwasser, eine Durchtrittsöffnung für Warmwasser, eine Durchtrittsöffnung für Mischwasser und zwei mit der Hydraulikleitung kommunizierende Durchgangsbohrungen aufweist,
   wobei
c) die Steuerscheibe in ihrer an der Grundscheibe anliegenden Fläche eine erste Nut aufweist, welche in einer ersten Stellung der Steuerscheibe eine Verbindung zwischen der einen der beiden Durchgangsbohrungen der Grundscheibe mit der Durchtrittsöffnung für Kaltwasser oder der Durchtrittsöffnung für Warmwasser herstellt, und in dieser Fläche eine zweite Nut aufweist, welche in einer zweiten Stellung der Steuerscheibe eine Verbindung zwischen der zweiten der beiden Durchgangsbohrungen der Grundscheibe und der Durchtrittsöffnung für Mischwasser herstellt.

Mischwasserarmaturen, die mit ebenen Scheiben als steuernden Elementen arbeiten, sind wegen ihrer leichten Bedienbarkeit und langen Lebensdauer außerordentlich beliebt. Sie lassen sich durch geringfügige Modifikationen in der erfindungsgemäßen Weise umgestalten. Zu diesen Modifikationen gehören die zusätzlichen Durchgangsbohrungen in der Grundscheibe sowie die beiden Nuten in der der Grundscheibe zugewandten Fläche der beweglichen Steuerscheibe. Im übrigen bleibt die Konstruktion der Mischarmatur unverändert, so daß beispielsweise das äußere Armaturengehäuse von früheren Konstruktionen übernommen werden kann. Ggf. lassen sich auch bereits vorhandene Mischarmaturen problemlos umrüsten.

Zweckmäßigerweise sind die Steuerscheibe und die Grundscheibe in einem Kartuschengehäuse angeordnet, das unten durch einen Kartuschenboden abgeschlossen ist, der ebenfalls eine Durchtrittsöffnung für Kaltwasser, eine Durchtrittsöffnung für Warmwasser, eine Durchtrittsöffnung für Mischwasser und zwei Durchgangsbohrungen, welche mit der Hydraulikleitung kommunizieren, aufweist, wobei auf der äußeren Stirnfläche des Kartuschenbodens ein Kanal eingearbeitet ist, welcher die beiden Durchgangsbohrungen miteinander verbindet. Die Unterbringung von Steuerscheiben in sog. Steuerkartuschen ist weit verbreitet, da beim Auftreten eines Fehlers einfach die gesamte Steuerkartusche ausgetauscht werden kann. Die oben zuletzt geschilderte Ausführungsform der Erfindung läßt sich aus bekannten Steuerkartuschen sehr einfach dadurch herstellen, daß nur der Kartuschenboden ebenfalls zusätzliche Durchgangsbohrungen erhält, die dann auf der äußeren Kartuschenfläche miteinander verbunden werden. Eine Verbindung dieser beiden Durchgangsbohrungen ist deshalb vorteilhaft, weil dann der Boden des äußeren Armaturengehäuses, welches die Steuerkartusche umgibt, nur noch von einer einzigen Bohrung durchstoßen zu werden braucht. Die äußere Fläche des Kartuschenbodens bietet sich aus herstellungstechnischen und geometrischen Gründen für eine derartige Verbindung an..

Ein Ausführungsbeispiel der Erfindung wird nachfolgend anhand der Zeichnung näher erläutert; es zeigen
- Figur 1: eine Axialschnitt durch die Steuerkartusche eines sanitären Einhebelmischventils mit darunter angeordnetem zweiteiligem Boden;
- Figur 2: in einem gegenüber Figur 1 verkleinertem Maßstab einen Axialschnitt durch ein Ablaufventil, das von der Steuerkartusche der Figur 1 aus hydraulisch betätigt wird;
- Figur 3: in vergrößertem Maßstab die Unteransicht der beweglichen Steuerscheibe der Steuerkartusche von Figur 1;
- Figur 4: die Draufsicht auf die feststehende Grundscheibe der Steuerkartusche von Figur 1;
- Figur 5: die Draufsicht auf den Boden der Steuerkartusche von Figur 1;
- Figur 6: die Unteransicht des in Figur 5 dargestellten Kartuschenbodens;
- Figur 7: die Draufsicht auf das obere Bodenteil, welches sich in Figur 1 unterhalb der Steuerkartusche befindet.

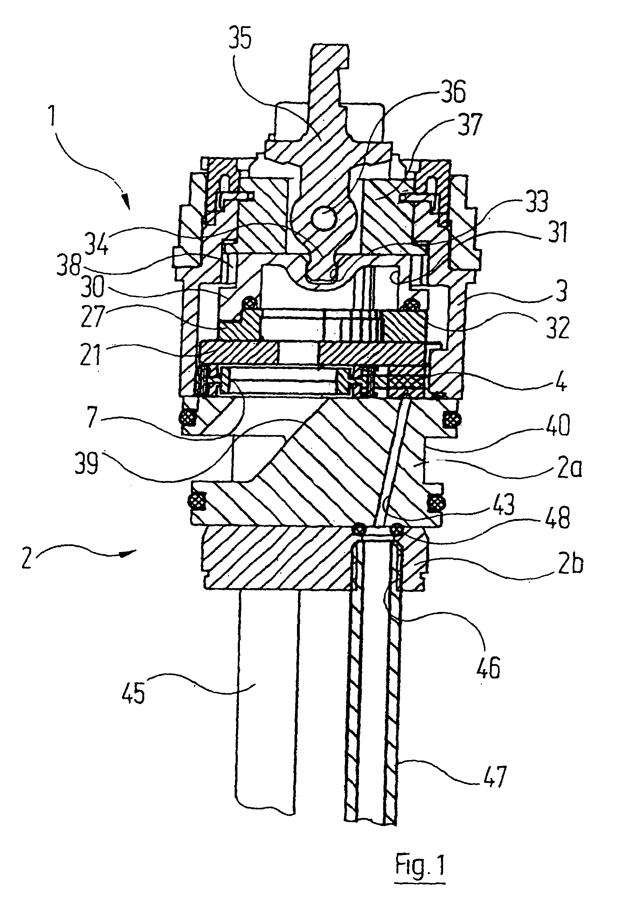

In Figur 1 ist mit dem Bezugszeichen 1 insgesamt eine Steuerkartusche bezeichnet, die in ihrem grundsätzlichen Aufbau bis auf nachfolgend im einzelnen beschriebenen Einzelheiten bekannt ist. Diese Steuerkarutsche 1 ist auf einem aus zwei Teilen 2a, 2b zusammengesetzen Armaturengehäuseboden 2 aufgesetzt.

Die Steuerkartusche 1 umfaßt ein im wesentlichen rotationssymmetrisches Kartuschengehäuse 3, in dem von unten nach oben die nachfolgend geschilderten Bauelemente untergebracht sind:

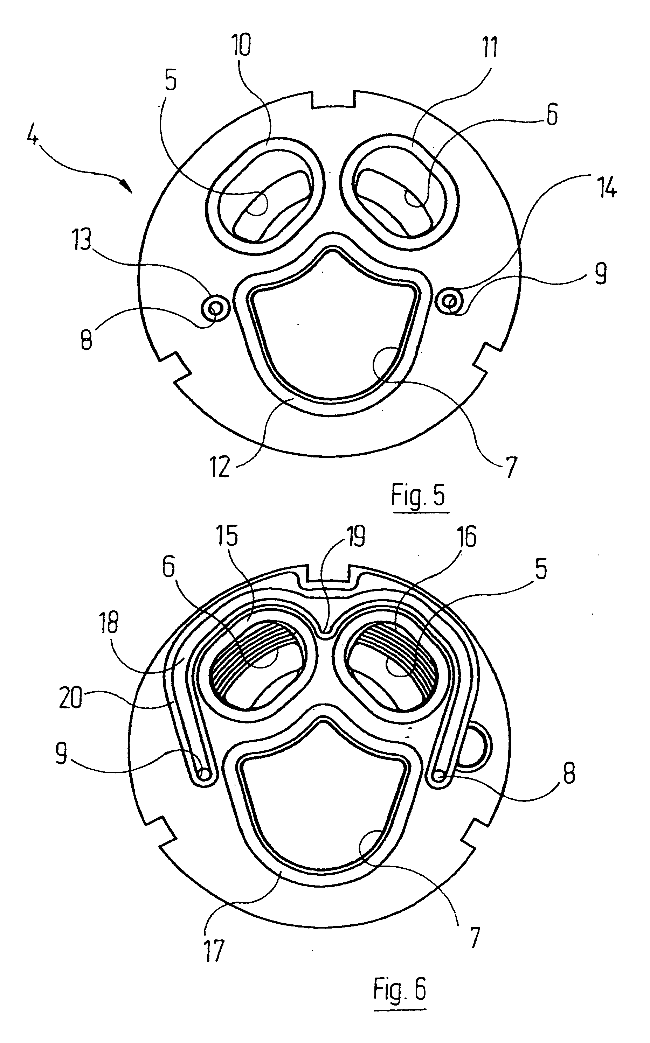

Der Kartuschenboden 4, der in den Figuren 5 und 6 näher dargestellt ist, ist in das untere, offene Ende des Kartuschengehäuses 3 eingesetzt. In ihm sind zwei Durchtrittsöffnungen 5, 6 für Warm- bzw. Kaltwasser sowie eine größere Durchtrittsöffnung 7 für Mischwasser ausgebildet. Seitlich von der Mischwasser-Durchtrittsöffnung 7 sind, etwas unterhalb der horizontalen Äquatorlinie der Figur 5 und 6, durch den Kartuschenboden 4 außerdem zwei kleine Durchgangsbohrungen 8, 9 hindurchgeführt, deren Sinn später deutlich werden wird.

Die Mündungsstellen aller Durchtrittsöffnungen und Durchgangsbohrungen 5, 6, 7, 8, 9 in die in Figur 5 dargestellte Oberseite des Kartuschenbodens 4 sind jeweils von Dichtungen 10, 11, 12, 13, 14 umgeben, die in entsprechend geformten Nuten des Kartuschenbodens 4 einliegen.

In entsprechender Weise sind auch die Mündungen der Durchtrittsöffnungen 5, 6, 7 in die in Figur 6 dargestellte Unterseite des Kartuschenbodens 4 mit Dichtungen 15, 16, 17 umgeben. Die Mündungsöffnungen der Durchgangsbohrungen 8, 9 dagegen sind über einen bogenförmig die Durchtrittsöffnungen 5, 6 umgreifenden Kanal 18 miteinander verbunden. Der Kanal 18 weist in seiner Mitte eine in den Zwischenraum zwischen den beiden Durchtrittsöffnungen 5, 6 hineinreichende Einziehung 19 auf. Der gesamte Kanal 18 einschließlich der Mündungsöffnungen der Durchgangsbohrungen 8, 9 ist von einer weiteren entsprechend geformten Dichtung 20 umgeben.

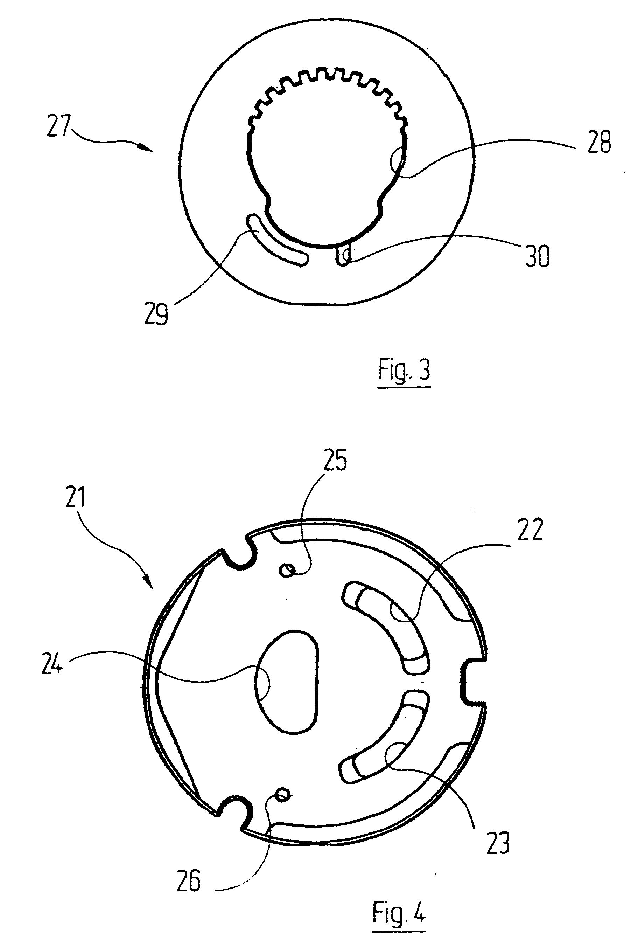

Auf dem oben geschilderten Kartuschenboden 4 liegt unverschiebbar und unverdrehbar eine ebene Grundscheibe 21 auf. Die Grundscheibe 21 besteht in bekannter Weise aus keramischem Material und ist an ihrer Oberseite auf hohe Güte poliert. Wie aus Figur 4 ersichtlich ist, weist auch die Grundscheibe 21 zwei Durchtrittsöffnungen 22, 23 für Kalt- bzw. Warmwasser auf, die die Form von Kreisringsegmenten besitzen, sowie eine größere Durchtrittsöffnung 24 für Mischwasser. Seitlich von der Durchtrittsöffnung 24 durchstoßen die Grundscheibe 21 wieder zwei im Durchmesser kleine Durchgangsbohrungen 25, 26, welche mit den Durchgangsbohrungen 8, 9 des Kartuschenbodens 4 fluchten.

Auf der feststehenden Grundscheibe 21 liegt eine ebene Steuerscheibe 27 auf, die in bekannter Weise gegenüber der Grundscheibe 21 rotatorisch und translatorisch bewegbar ist. Auch die bewegliche Steuerscheibe 27 ist aus Keramik gefertigt und an ihrer nach unten weisenden, in Figur 3 dargestellten und auf der Grundscheibe 21 aufliegenden Fläche auf hohe Güte poliert. Die bewegliche Steuerscheibe 27 ist mit einer großflächigen Durchtrittsöffnung 28 versehen, deren genaue Form im vorliegenden Zusammenhang uninteressant ist und die je nach der Relativstellung der beweglichen Steuerscheibe 27 die Durchtrittsöffnungen 22, 23, 24 der Grundscheibe 21 in unterschiedlichem Ausmaß überlappt. In einer Schließstellung der Steuerkartusche 1 werden die Durchtrittsöffnungen 22, 23 der Grundscheibe 21 von dem die Durchtrittsöffnung 28 der beweglichen Steuerscheibe 27 umgebenden Ringbereich der Steuerscheibe 27 abgedeckt, so daß kein Wasser fließen kann.

In die untere, in Figur 3 dargestellte Stirnfläche der beweglichen Steuerscheibe 27 ist außerdem eine kreisbogenförmige Nut 29 eingeformt. Diese liegt in der Schließstellung der beweglichen Steuerscheibe 27 auf dem selben Radius, bezogen auf die Achse der Grundscheibe 21, auf dem sich auch die Durchgangsbohrungen 25, 26 der Grundscheibe 21 befinden. Eine weitere, in die fragliche Stirnfläche der beweglichen Steuerscheibe 27 eingearbeitete Nut 30 beginnt auf dem selben Radius, auf dem die Nut 29 liegt, und öffnet sich zur Durchtrittsöffnung 28 hin. Der Sinn der beiden Nuten 29, 30 wird weiter unten deutlich werden.

Oberhalb der beweglichen Steuerscheibe 27 ist, wie der Figur 1 zu entnehmen ist, ein Kunststoff-Mitnahmeteil 30 angeordnet, welches mit der beweglichen Steuerscheibe 27 so verbunden ist, daß beide Teile gemeinsam rotatorisch und translatorisch verschiebbar sind. Das Mitnahmeteil 30 besitzt eine sich nach unten öffnende Ausnehmung 31, welche die Durchtrittsöffnung 28 der beweglichen Steuerscheibe 27 vollständig überdeckt, so daß die Durchtrittsöffnung 28 der beweglichen Steuerscheibe 27 mit der Ausnehmung 31 des Mitnahmeteils 30 einen Wasserumlenkund Mischraum bildet. Eine an den benachbarten Flächen der beweglichen Steuerscheibe 27 und des Mitnahmeteils 30 einliegende Dichtung 32 verhindert, daß zwischen diesen Teilen Wasser in seitlicher Richtung austritt.

In die obere Stirnseite des Mitnahmeteils 30 ist eine Mitnahmeöffnung 33 eingeformt, in welche der Kopf 34 eines Stellschafts 35 formschlüssig eingreift. Der Stellschaft 35 ist mittels eines Schwenkzapfens 36 an einem Führungsteil 37 verschwenkbar gelagert, welches seinerseits das Gehäuse 3 der Kartusche nach oben abschließt und in diesem um die Achse des Gehäuses 3 verdrehbar gelagert ist. Das Führungsteil 37 übergreift mit zwei parallelen, ebenen Führungsflächen 38, von denen nur eine in der Figur 1 erkennbar ist, zwei im oberen Bereich des Mitnahmeteils 30 ausgebildete parallele Führungsflächen, die in der Zeichnung beide nicht zu sehen sind. Die Anordnung ist so, daß durch Verschwenken des Stellschafts 35 um den Schwenkzapfen 36 aufgrund der Wirkung des Mitnahmekopfs 34 und der Mitnahmeöffnung 33 die von der beweglichen Steuerscheibe 27 und dem Mitnahmeteil 30 gebildete Einheit linear zwischen den Führungsflächen 38 des Führungsteils 37 geführt wird, während bei einer Verdrehung des Stellschafts 35 um die vertikale Achse der Steuerkartusche 1 die fragliche Einheit aufgrund der Wechselwirkung zwischen den Führungsflächen 28 des Führungsteils 37 und den hieran anliegenden Führungsflächen des Mitnahmeteils 30 um eben diese Kartuschenachse verdreht wird.

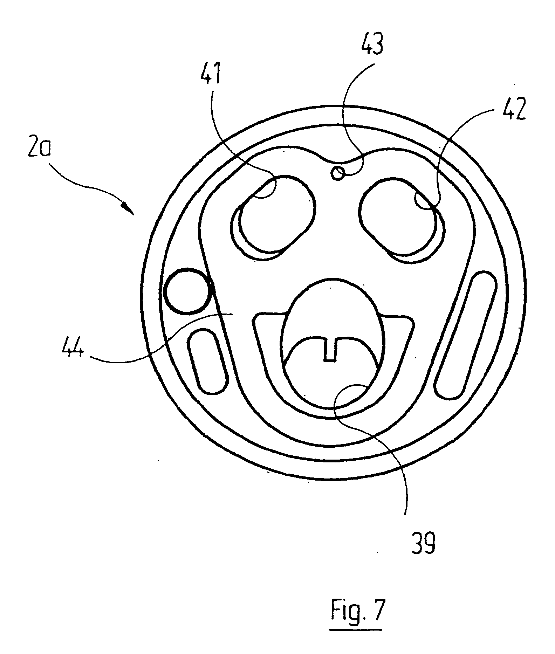

Das obere Bodenteil 2a des Armaturengehäuses weist einen schräg verlaufenden Kanal 39 auf, dessen Mündungsöffnung in der oberen, in Figur 7 dargestellten Fläche mit der Durchtrittsöffnung 7 des Kartuschenbodens 4 kommuniziert. Am anderen Ende führt der Kanal 39 in eine an der Umfangsfläche des Bodenteils 2a vorgesehene Nut 40, die gemeinsam mit dem das Bodenteil 2a umgebenden nicht dargestellten Armaturengehäuse einen Ringraum begrenzt, der seinerseits mit dem Auslauf der Sanitärarmatur kommuniziert. Wie insbesondere die Figur 7 zeigt, verlaufen durch das obere Bodenteil 2a außerdem zwei Zulaufkanäle 41, 42, deren Mündungsstellen in die obere, in Figur 7 dargestellte Stirnfläche des oberen Bodenteils 2a mit den Durchtrittsöffnungen 5, 6 des Kartuschenbodens 4 kommunizieren. Schließlich ist ungefähr in der in Figur 7 vertikalen Symmetrieebene des oberen Bodenteils 2a, etwa in Höhe des oberen Abschlusses der beiden Mündungsöffnungen der Zulaufkanäle 41, 42 eine Durchgangsbohrung 43 kleinen Durchmessers vorgesehen, deren Mündungsöffnung im Bereich der Einziehung 19 des Kanals 18 in der Unterseite des Kartuschenbodens 4 liegt. Die Mündungsstellen aller Kanäle und Bohrungen 39, 41, 42, 43, in die obere Stirnfläche des oberen Bodenteils 2a sind von einer gemeinsamen Flachdichtung 44 umgeben.

Das untere Bodenteil 2b besteht aus Metall. Es weist zwei Durchtrittsöffnungen auf, die in der Zeichnung nicht dargestellt sind und mit den Zulaufkanälen 41, 42 des oberen Bodenteils 2a kommunizieren. In diesen Durchtrittsöffnungen des unteren Bodenteils 2b sind Zuflußrohre 45 für Kalt- und Warmwasser befestigt, von denen eines in Figur 1 gezeigt ist. In eine weitere Durchgangsbohrung 46 des unteren Bodenteils 2b, welche im unteren Bereich als Gewindebohrung ausgestaltet ist, ist das Ende einer Hydraulikleitung 47 eingeschraubt, deren Funktion weiter unten deutlich wird.

Zwischen dem oberen Bodenteil 2a und dem unteren Bodenteil 2b sind verschiedene O-Ringdichtungen angeordnet, welche jeweils die Mündungsstellen der verschiedenen Bohrungen und Kanäle umgeben und von denen eine (48) in Figur 1 erkennbar ist.

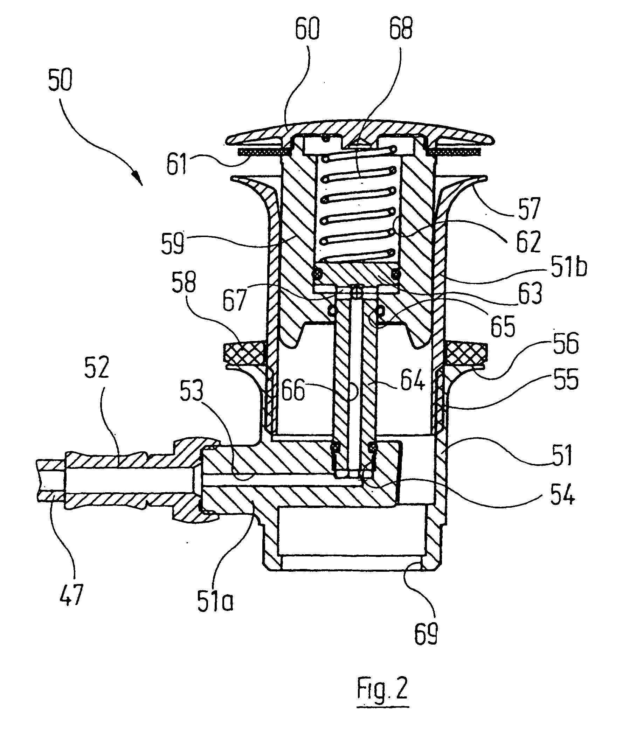

Die Hydraulikleitung 47 führt zu dem Ablaufventil des Waschtischs, an dem die Einhebelmischarmatur angebracht ist. Dieses Ablaufventil ist in Figur 2 im Axialschnitt dargestellt und insgesamt mit dem Bezugszeichen 50 gekennzeichnet. Es umfaßt ein aus zwei Teilen 51a, 51b zusammengesetzte Gehäuse 51. Das untere Gehäuseteil 51a weist einen seitlichen Anschluß 52 für das Verbindungsrohr 47 auf, von dem ein Kanal 53 zu einer sich mittig im Inneren des unteren Gehäuseteils 51a nach oben öffnenden Gewindebohrung 54 führt. Der obere, schürzenartige Bereich 55 des unteren Gehäuseteils 51a erweitert sich nach oben zu einem Klemmflansch 56, auf welchem eine ringförmige Dichtscheibe 58 liegt.

In den schürzenartigen Bereich 55 des unteren Gehäuseteils 51a ist von oben her das obere Gehäuseteil 51b eingeschraubt. Bei diesem handelt es ich um ein im wesentlichen hohlzylindrisches Teil, welches sich oben zu einem Flansch 57 erweitert. Das untere Gehäuseteil 51a wird von der Unterseite her unter Beifügung der Dichtscheibe 58 an den Waschtisch herangeführt, während das obere Gehäuseteil 51b von oben her durch die Ablauföffnung des Waschtisch hindurchgeschraubt wird, bis der Boden des Waschtischs zwischen den beiden Flanschen 55 und 57 verklemmt ist.

In dem zylindrischen Innenraum ist ein Führungskörper 59 axial verschiebbar geführt, der an seiner Umfangsfläche vom Wasser durchströmbare Ausnehmungen aufweist. Der Führungskörper 59 trägt an seiner Oberseite einen in der Draufsicht kreisförmigen scheibenförmigen Kopf 60, wobei zwischen dem Kopf 60 und dem Führungskörper 59 eine kreisringförmige Dichtscheibe 61 verspannt ist.

Im Inneren des Führungskörpers 59 ist eine sich nach oben öffnende Zylinderbohrung 62 vorgesehen. In der Zylinderbohrung 62 ist ein Kolben 63 verschiebbar, dessen Kolbenstange 64 durch eine Bohrung 65 kleineren Durchmessers abgedichtet hindurchgeführt ist. Das in Figur 2 untere Ende der Kolbenstange 64 ist, erneut abgedichtet, in die Gewindebohrung 54 des unteren Gehäuseteils 51a eingeschraubt. Die Kolbenstange 64 wird axial von einer Bohrung 66 durchsetzt, die in dem unmittelbar unterhalb des Kolbens 63 liegenden Bereich durch mehrere radial gerichtete Bohrungen 67 mit dem unterhalb des Kolbens 63 liegenden Teil der Zylinderbohrung 62 kommuniziert.

Zwischen der Unterseite des Kopfes 60 und der Oberseite des Kolbens 63 ist eine Druckfeder 68 verspannt, welche normalerweise den Führungskörper 59 und damit den Kopf 60 nach oben in die in Figur 2 dargestelle Öffnungsstellung drückt.

Am unteren Ende des unteren Gehäuseteils 51a ist eine Abflußöffnung 69 vorgesehen, die mit einem Siphon in bekannter Weise verbunden werden kann.

Die Funktionsweise der oben beschriebenen Sanitäreinrichtung ist wie folgt:

Zunächst sei angenommen, daß der Strömungsweg, welcher die Durchgangsbohrung 25 in der Grundscheibe 21, die Durchgangsbohrung 13 im Kartuschenboden 4, den Kanal 18 in der Unterseite des Kartuschenbodens 4 sowie die Bohrung 43 im oberen Bodenteil und die Bohrung 46 im unteren Bodenteil 2b umfaßt, drucklos ist. Dann sind auch der Innenraum der Hydraulikleitung 47, der Kanal 53 im unteren Bodenteil 51a des Ablaufventils 50, die Axialbohrung 66 der Kolbenstange 64 und der unterhalb des Kolbens 63 liegende Teil des Zylinderraums 62 des Führungskörpers 59 des Ablaufventils 50 drucklos. Die Druckfeder 68 drückt, wie schon oben erwähnt, den Kopf 60 und die Dichtung 61 in die Offenstellung. Die Steuerkartusche 1 kann in gewohnter Weise bedient werden: Je nach Relativstellung zwischen der beweglichen Steuerscheibe 27 und der Grundscheibe 21, die mit Hilfe des Stellschafts 35 eingestellt wird, fließt mehr oder weniger Kalt- und/oder Warmwasser durch die Steuerkartusche 1 und den Kanal 39 sowie die Nut 40 des oberen Bodenteils 2a zum Auslauf der Armatur.

Wünscht der Benutzer nun, das Ablaufventil 50 zu schließen, so verfährt er folgendermaßen: Zunächst bringt er die Steuerkartusche 1 durch eine entsprechende Schwenkbewegung des Stellschafts 35 um den Schwenkzapfen 36 in den Schließzustand. Nun verschwenkt er, ebenfalls mit Hilfe des Stellschafts 35, die bewegliche Steuerscheibe 27 um die Achse der Steuerkartusche 1 so, daß die kreisbogenförmige Nut 29 an der Unterseite der beweglichen Stellscheibe 27 eine Verbindung zwischen der Kaltwasser führenden Durchtrittsöffnung 22 der Grundscheibe 21 und der Durchgangsbohrung 25 der Grundscheibe 21 herstellt. Die bewegliche Steuerscheibe 27 verläßt dabei ihren normalen, für die Steuerung der Wasserströme benutzten Schwenkbereich. Nunmehr fließt Wasser über diese Durchgangsbohrung 25 sowie die Durchgangsbohrung 8 des Kartuschenbodens 4 in den Kanal 18 an der Unterseite des Kartuschenbodens 4 und von dort über die Bohrung 43 des oberen Bodenteils 2a, die Bohrung 46 des unteren Bodenteils 2b, die Hydraulikleitung 47, den Kanal 53 im unteren Gehäuseteil 51a des Ablaufventils 50, die Axialbohrung 66 der Kolbenstange 64 und die Radialbohrungen 67 in denjenigen Teil der Zylinderbohrung 62, der unterhalb des Kolbens 63 liegt. Da der Kolben 63 selbst stillsteht, wird nunmehr der Führungskörper 59 unter Kompression der Druckfeder 68 nach unten gedrückt. Die Dichtung 61 legt sich an die obere Stirnseite des Flanschs 57 des oberen Gehäuseteils 51b des Ablaufventils 50 an, wodurch das Ablaufventil 50 geschlossen wird.

Der Benutzer kann nunmehr diejenige Relativposition der beweglichen Steuerscheibe 27 gegenüber der Grundscheibe 21 wieder verlassen, die zum Schließen des Ablaufventils 50 geführt hat. Da der Druck in dem unterhalb des Kolbens 63 liegenden Zylinderraum 52 des Ablaufventils 50 nicht entweichen kann, bleibt das Ablaufventil 50 in seiner Schließstellung. Der Benutzer kann nunmehr erneut die Sanitärarmatur nach Belieben benutzen und nach seinen Wünschen Kalt- und/oder Warmwasser entnehmen.

Möchte der Benutzer das Ablaufventil 50 wieder öffnen, so verfährt er wie folgt: Erneut bringt der Benutzer zunächst die Steuerkartusche 1 in den Schließzustand. Er verschwenkt sodann die bewegliche Steuerscheibe 27 mit Hilfe des Stellschafts 35 in einer Richtung, die derjenigen entgegengesetzt ist, die zu einem Schlieβen des Ablaufventils 50 geführt hat. Er erreicht auf diese Weise eine Stellung der beweglichen Steuerscheibe 27, bei welcher die an deren Unterseite eingebrachte Nut 30 mit der Durchgangsbohrung 26 in der Grundscheibe 21 fluchtet und damit letztendlich über den schon mehrfach geschilderten Strömungsweg mit dem unterhalb des Kolbens 63 des Ablaufventils 50 liegenden Teil des Zylinderraums 62 kommuniziert. Der Druck in diesem Teil des Zylinderraums 62 kann nunmehr über den geschilderten Weg und insbesondere über die Nut 30 in der beweglichen Steuerscheibe 27 zur Durchtrittsöffnung 28 der Steuerscheibe 27 und damit letztendlich zum Auslauf der Sanitärarmatur hin abgebaut werden. Unter dem Einfluß der Druckfeder 68 werden der Kopf 60 und die Dichtscheibe 61 wieder nach oben gedrückt, so daß das Ablaufventil 50 in die Offenstellung der Figur 2 gelangt und das im Waschtisch aufgestaute Wasser zwischen dem Führungskörper 59 und dem oberen Gehäuseteil 51b und durch das untere Gehäuseteil 51a zur Ablauföffnung 69 fließen kann.

Die Steuerkartusche 1 ist dabei so ausgebildet, daß zwischen den extremen Schwenkstellungen der Steuerscheibe 27, die dem Normalbetrieb der Steuerkartusche 1 zugeordnet sind, und denjenigen beiden Stellungen, in denen das Ablaufventil 50 betätigt wird, ein Widerstand zu überwinden ist, der beispielsweise von einer nicht dargestellten Rasteinrichtung gebildet wird.

## Patentansprüche

1. Sanitäreinrichtung mit
a) einer Mischarmatur, die ihrerseits aufweist:
aa) ein Gehäuse, das einen Zulauf für kaltes Wasser, einen Zulauf für warmes Wasser und einen Auslauf für Mischwasser umfaßt;
ab) ein in dem Gehäuse angeordnetes, von Hand betätigbares Ventilelement, welches durch Bewegung in unterschiedlichen Richtungen den Fluß von Kalt- und/oder Warmwasser in einstellbarer Weise freigibt;
b) einer Peripherieeinrichtung, welche über eine wasserführende Hydraulikleitung mit der Mischarmatur verbunden und von dieser aus betätigbar ist;
c) einem in dem Gehäuse der Mischarmatur angeordneten Umstellelement, welches in einer ersten Stellung eine Verbindung zwischen einem Wasserzulauf und der Hydraulikleitung und in einer zweiten Stellung eine Verbindung zwischen dem Auslauf und der Hydraulikleitung herstellt,
**dadurch gekennzeichnet, daß**
d) das Ventilelement (27) derart ausgestaltet ist, daß es gleichzeitig als Umstellelement dient und in denjenigem Bereich seiner möglichen Positionen, in denen es die normale Funktion einer Mischarmatur erfüllt, eine Kommunikation der Hydraulikleitung (47) sowohl mit dem Zulauf (41, 42) als auch mit dem Auslauf (39, 40) unterbindet.

2. Sanitäreinrichtung nach Anspruch 1, **dadurch gekennzeichnet, daß** die beiden Stellungen des Ventilelements (27), in denen dieses eine Verbindung zu der Hydraulikleitung (47) herstellt, durch Bewegen des Ventilelements (27) in einer Richtung, die einer Veränderung der Temperatur des auslaufenden Mischwassers entspricht, erreichbar sind.

3. Sanitäreinrichtung nach Anspruch 1 oder 2, **dadurch gekennzeichnet, daß** die beiden Stellungen des Ventilelements (27) durch eine Bewegung des Ventilelements (27) erreichbar sind, die eine Bewegung in Schließrichtung beinhaltet.

4. Sanitäreinrichtung nach Anspruch 3, **dadurch gekennzeichnet, daß** die beiden Stellungen des Ventilelements (27) durch eine Bewegung des Ventilelements (27) erreichbar sind, die eine Bewegung in Schließrichtung über die Schließposition hinaus beinhaltet.

5. Sanitäreinrichtung nach einem der Ansprüche 2 bis 4,
**dadurch gekennzeichnet, daß** eine Einrichtung vorgesehen ist, welche an der Grenze des normalen Bewegungsbereichs des Ventilelements (27) einen überwindbaren Widerstand erzeugt.

6. Sanitäreinrichtung nach einem der vorhergehenden Ansprüche, **dadurch gekennzeichnet, daß**
a) das bewegliche Ventilelement (27) eine ebene Steuerscheibe ist, die eine Ausnehmung (31) aufweist, welche zumindest teilweise einen Wasserumlenkkanal bildet;
b) eine mit der Steuerscheibe (27) zusammenwirkende, feststehende ebene Grundscheibe (21) vorgesehen ist, welche eine Durchtrittsöffnung (22) für Kaltwasser, eine Durchtrittsöffnung (23) für Warmwasser, eine Durchtrittsöffnung (24) für Mischwasser und zwei mit der Hydraulikleitung (47) kommunizierende Durchgangsbohrungen (25, 26) aufweist,
wobei
c) die Steuerscheibe (27) in ihrer an der Grundscheibe (21) anliegenden Fläche eine erste Nut (29) aufweist, welche in einer ersten Stellung der Steuerscheibe (27) eine Verbindung zwischen der einen (25) der beiden Durchgangsbohrungen (25, 26) der Grundscheibe (21) mit der Durchtrittsöffnung (22) für Kaltwasser oder der Durchtrittsöffnung (23) für Warmwasser herstellt, und in dieser Fläche eine zweite Nut (30) aufweist, welche in einer zweiten Stellung der Steuerscheibe (27) eine Verbindung zwischen der zweiten (26) der beiden Durchgangsbohrungen (25, 26) der Grundscheibe (21) mit der Durchtrittsöffnung (24) für Mischwasser herstellt.

7. Sanitäreinrichtung nach Anspruch 6, **dadurch gekennzeichnet, daß** die Steuerscheibe (27) und die Grundscheibe (21) in einem Kartuschengehäuse (3) angeordnet sind, das nach unten durch einen Kartuschenboden (4) abgeschlossen ist, der ebenfalls eine Durchtrittsöffnung (5) für Kaltwasser, eine Durchtrittsöffnung (6) für Warmwasser, eine Durchtrittsöffnung (7) für Mischwasser und zwei Durchgangsbohrungen (8, 9), welche mit der Hydraulikleitung (47) kommunizieren, aufweist, und daß auf der äußeren Stirnfläche des Kartuschenbodens (4) ein Kanal (18) eingearbeitet ist, welcher die beiden Durchgangsbohrungen (8, 9) miteinander verbindet.

## Claims

1. A sanitary device having
a) a mixing fitting, which in turn has:
aa) a housing comprising an inlet for cold water, an inlet for warm water and an outlet for mixed water;
ab) a valve element which is arranged in the housing, can be actuated manually and releases the flow of cold and/or warm water in adjustable manner as a result of being moved in different directions;
b) a peripheral device which, by way of a water-conducting hydraulic line, is connected to the mixing fitting and can be actuated therefrom;
c) a change-over element which is arranged in the housing of the mixing fitting and produces a connection between a water inlet and the hydraulic line in a first position and a connection between the outlet and the hydraulic line in a second position,
**characterised in that**
d) the valve element (27) is constructed in such a way that it simultaneously serves as a change-over element and, in those positions within its possible range of positions in which it fulfils the normal function of a mixing fitting, prevents the hydraulic line (47) from communicating with both the inlet (41, 42) and the outlet (39, 40).

2. A sanitary device according to Claim 1, **characterised in that** the two positions of the valve element (27) in which this latter produces a connection with the hydraulic line (47) can be achieved by moving the valve element (27) in a direction which corresponds to a change in the temperature of the exiting mixed water.

3. A sanitary device according to Claim 1 or 2, **characterised in that** the two positions of the valve element (27) can be achieved by a movement of the valve element (27) which comprises a movement in the closing direction.

4. A sanitary device according to Claim 3, **characterised in that** the two positions of the valve element (27) can be achieved by a movement of the valve element (27) which comprises a movement in the closing direction beyond the closed position.

5. A sanitary device according to one of Claims 2 to 4, **characterised in that** a device is provided which generates a surmountable resistance at the limit of the normal movement range of the valve element (27).

6. A sanitary device according to one of the preceding claims, **characterised in that**
a) the movable valve element (27) is a planar control plate having a cutout (31) which at least partially forms a water-diverting channel;
b) a fixed planar base plate (21) cooperating with the control plate (27) is provided, which has a through opening (22) for cold water, a through opening (23) for warm water, a through opening (24) for mixed water and two through bores (25, 26) communicating with the hydraulic line (47),
c) the control plate (27) having, in its face abutting against the base plate (21), a first groove (29) which, in a first position of the control plate (27), produces a connection between one (25) of the two through bores (25, 26) in the base plate (21) and the through opening (22) for cold water or the through opening (23) for warm water and having, in this face, a second groove (30) which, in a second position of the control plate (27), produces a connection between the second (26) of the two through bores (25, 26) in the base plate (21) and the through opening (24) for mixed water.

7. A sanitary device according to Claim 6, **characterised in that** the control plate (27) and the base plate (21) are arranged in a cartridge housing (3) which is sealed at the bottom by a cartridge base (4) which likewise has a through opening (5) for cold water, a through opening (6) for warm water, a through opening (7) for mixed water and two through bores (8, 9) which communicate with the hydraulic line (47), and **in that**, incorporated in the outer end face of the cartridge base (4), there is a channel (18) which connects the two through bores (8, 9) to one another.

## Revendications

1. Dispositif sanitaire avec
a) une robinetterie mélangeuse, qui présente elle-même :
aa) un corps de robinetterie, qui comprend une arrivée d'eau froide, une arrivée d'eau chaude et une sortie d'eau mitigée ;
bb) un obturateur disposé dans le corps, pouvant être actionné manuellement, qui par un déplacement dans des directions différentes libère d'une manière réglable le flux d'eau froide et/ou d'eau chaude ;
b) un équipement périphérique, qui est relié à la robinetterie mélangeuse par l'intermédiaire d'une conduite hydraulique conduisant de l'eau et qui peut être actionné à partir de ladite robinetterie ;
c) un élément de commutation disposé dans le corps de la robinetterie mélangeuse, qui réalise dans une première position une liaison entre une arrivée d'eau et la conduite hydraulique et dans une deuxième position une liaison entre la sortie et la conduite hydraulique,
**caractérisé en ce que**
d) l'obturateur (27) est conçu de telle sorte qu'il sert en même temps d'élément de commutation et que, dans la plage de ses positions possibles dans lesquelles il assure le fonctionnement normal d'une robinetterie mélangeuse, il supprime la communication de la conduite hydraulique (47) tant avec l'arrivée (41, 42) qu'avec la sortie (39, 40).

2. Dispositif sanitaire selon la revendication 1, **caractérisé en ce que** les deux positions de l'obturateur (27) dans lesquelles ce dernier réalise une liaison vers la conduite hydraulique (47) peuvent être obtenues par un déplacement de l'obturateur (27) dans une direction qui correspond à une modification de la température de l'eau mitigée obtenue à la sortie.

3. Dispositif sanitaire selon la revendication 1 ou 2, **caractérisé en ce que** les deux positions de l'obturateur (27) peuvent être obtenues par un mouvement de l'obturateur (27) qui inclut un mouvement dans la direction de fermeture.

4. Dispositif sanitaire selon la revendication 3, **caractérisé en ce que** les deux positions de l'obturateur (27) peuvent être obtenues par un mouvement de l'obturateur (27) qui inclut un mouvement dans la direction de fermeture au-delà de la position fermée.

5. Dispositif sanitaire selon l'une des revendications 2 à 4, **caractérisé en ce qu'**il est prévu un équipement qui produit, à la limite de la plage normale de déplacement de l'obturateur (27), une résistance pouvant être surmontée.

6. Dispositif sanitaire selon l'une des revendications précédentes, **caractérisé en ce que**
a) l'obturateur mobile (27) est un disque de commande plan, qui présente un évidement (31) qui forme au moins pour partie un canal de déviation d'eau ;
b) il est prévu un disque de base plan (21) fixe, qui coopère avec le disque de commande (27) et qui présente une ouverture de passage (22) pour l'eau froide, une ouverture de passage (23) pour l'eau chaude, une ouverture de passage (24) pour l'eau mitigée et deux perçages traversants (25, 26) communiquant avec la conduite hydraulique (47),
c) le disque de commande (27) présentant, dans sa face appliquée contre le disque de base (21), une première rainure (29) qui, dans une première position du disque de commande (27), réalise une liaison entre le premier (25) des deux perçages traversants (25, 26) du disque de base (21) et l'ouverture de passage (22) pour l'eau froide ou l'ouverture de passage (23) pour l'eau chaude, et présentant dans cette face une deuxième rainure (30) qui, dans une deuxième position du disque de commande (27), réalise une liaison entre le deuxième (26) des deux perçages traversants (25, 26) du disque de base (21) et l'ouverture de passage (24) pour l'eau mitigée.

7. Dispositif sanitaire selon la revendication 6, **caractérisé en ce que** le disque de commande (27) et le disque de base (21) sont disposés dans un corps de cartouche (3), qui est fermé vers le bas par un fond de cartouche (4) qui présente lui aussi une ouverture de passage (5) pour l'eau froide, une ouverture de passage (6) pour l'eau chaude, une ouverture de passage (7) pour l'eau mitigée et deux perçages traversants (8, 9) qui communiquent avec la conduite hydraulique (47), et **en ce qu'**un canal (18) est ménagé sur la face frontale extérieure du fond de cartouche (4), canal qui relie entre eux les deux perçages traversants (8, 9).
